# EUROPEAN PATENT APPLICATION

(11) **EP 4 742 335 A1**
(43) Date of publication of application: **13.05.2026**
(21) Application number: 24383217.7
(22) Date of filing: 07.11.2024
(51) Int. Cl.: H01M 8/2485

(54) **FUEL CELL FOR AIRCRAFTS**

(71) Applicant: AIRBUS OPERATIONS, S.L.U., 28906 Getafe (Madrid) (ES)
(72) Inventor: DELGADO OLLERO, Alfonso, 28906 GETAFE (Madrid) (ES); PARDO HERRERO, Mónica, 28906 GETAFE (Madrid) (ES); UBIERNA HUIDOBRO, Iñigo, 28906 GETAFE (Madrid) (ES); SILVESTRE SALAS, Manuel, 28906 GETAFE (Madrid) (ES)
(74) Representative: Herrero & Asociados, S.L.

(57) **Abstract**

The fuel cell for aircrafts comprises a cell stack (2), comprising an anode (27), a cathode (29) and a proton exchange membrane (28); a frontal end plate (1) placed at one end of the cell stack (2); a rear end plate (3) placed at the other end of the cell stack (2); and an insulating panel (5, 8, 9) made from a polymer material placed between the cell stack (2) and one or both of the frontal end plate (1) and the rear end plate (3).

It permits to provide a fuel cell that solves electrical insulation problems of fuel cells for aeronautical use in and allows the connection of a floating bonding network in an aircraft.

## Description

The present invention relates to a fuel cell for aircrafts, that solves electrical insulation problems of fuel cells for aeronautical use in and allows the connection of a floating bonding network in an aircraft.

### Background of the invention

A fuel cell is an electrochemical device, which by an electrochemical reaction of a fuel (hydrogen, methanol, natural gas etc.) and oxygen at the anode that produces heat and electricity, which can be used to power a vehicle or in a stationary application.

The fuel cells have many advantages over traditional thermal machines, such as their performance, their size or their dynamic response capacity in the face of a transient or demand, this characteristic being highly appreciated in the aeronautical industry. However, there is still a long way to go when it comes to specific power, the weight being very critical when embarking on an aircraft.

A fuel cell can be manufactured in different formats and types depending on its technology. There are low-temperature alkaline (AFC), polymeric (PEMFC), direct methanol (DMFC) and high-temperature, solid oxide (SOFC), molten carbonate (MCFC) and high-temperature polymeric (HT-PEM) fuel cells.

A fuel cell comprises one or more cells installed in series to form a stack. These cells consist of an anode, where the oxidation of the fuel takes place, and a cathode where the oxygen is reduced to produce water. The anode and cathode are separated by a membrane, or ceramic, which is usually conductive, allowing the ions to diffuse freely from the anode to the cathode.

On this membrane, the catalyst particles are deposited on both sides. To improve gas diffusion on both sides of the membrane, a carbon cloth or mesh is added to make it electrically conductive, improving the contact between the phases and providing a larger possible diffusion area. This part is called gas diffusion layer or GDL.

Between both sides of the assembled membrane, catalyst membrane and GDL, several polymeric gaskets are placed in order to seal the membrane on both sides with the bipolar or mono-polar plates placed at the ends of the stack.

Bi-polar plates are plates made of any electrically conductive material with channels of a certain morphology through which H2 or fuel passes to the anode or oxygen or air to the cathode, distributing the reagents homogeneously on both sides of the membrane and efficiently evacuating the reaction products such as the water formed, avoiding the formation of hotspots on the membrane.

Bi-polar plates are so called because they act as both cathode and anode, i.e. one side is the cathode of one cell and the other side is the anode of the adjacent cell. Inside the bi-polar plates, which generally consist of two parts separated by a seal, circulates the coolant that cools the fuel cell, if necessary and depending on the type of fuel cell, as if it were a casing.

At the ends of the stack, the monopolar plates are located, i.e. they are simple in that they have only one side through which the air or fuel circulates and are the cathode or the final anode, depending on the cell arrangement of the stack. Next to the monopolar plates, there are current collector plates made of copper or other electrically conductive material, these being the fuel cell terminals where the external electrical connection is made. To close the stack, the end or closure plates are placed with the external interfaces. These plates are external to the stack and their function is to provide sufficient mechanical integrity to prevent the "sandwich" from disassembling. These plates can be made of different insulating materials such as thermoplastic (e.g. polyphenylene sulphide) or metal (e.g. anodised aluminium, stainless steel etc.).

On these plates, there is a nominal current leakage which, depending on the quality of the internal stack insulation, can be higher or lower. On these plates are placed mechanical interfaces, which can also be made of the same material as the end plates. These interfaces are responsible for interconnecting the different ports of the stack, O2 or air, H2 or fuel and coolant to the balance of plant, which allows the stack to work.

These interfaces are communicated with all the cells inside them, and their insulation is very important because, depending on this, there will be a greater or lesser leakage of current towards the air and fuel supply and exhaust pipes, which should also be insulated and grounded.

On these collector plates, an insulation layer or piece composed of a polymer or oxide is introduced in the form of a piece or coating, such as mentioned in patent US6773841 B2, which proposes to use an electrolytically deposited coating by a PVD or CVD technique, which consists of physical (PVD) or chemical (CVD) in the deposition of an insulating material by means of a plasma of its ions.

This electrical insulation layer allows the stack to be electrically connected as a floating device, i.e. insulating completely the electrical power terminals from the outside, which is an essential requirement in aircrafts.

Insulation layers produced by PVD or CVD techniques require a more laborious process during manufacture, which can be eliminated by placing another type of insulation in the stack as is used in aviation, thus also allowing the metal interfaces to be insulated and being negligible in weight.

The integration and operation of a fuel cell with aeronautical requirements in which the amount of flammable materials has to be reduced and the interfaces have to withstand the different loads and "g" forces of the aircraft, requires the use of reinforced or metallic materials, the last ones being a preferential option.

As a consequence, this implies a change in the materials used in the interfaces, especially in the cooling and air interfaces, which are electrically insulating, for those normally used in the automotive sector, and which are made of thermosetting plastic such as PPS, Nylon, ABS or even PC. In addition to the material change of the interfaces, the end plates of the stack are also required to be a non-flammable material.

Due to these changes of non-flammable materials, from plastic to metal, the insulation of the entire stack decreases as the ohmic resistance of these materials is reduced, causing a part of the electrical current to leak through the tubes and the stack end plates.

This lack of electrical insultation needs to be prevented when the fuel cells are on-board the aircraft because the system is required to be floating, i.e. the positive and negative stack power terminals are not completely isolated from the aircraft structure and are an electrical risk to the operation of other equipment.

### Description of the invention

Therefore, an objective of the present invention is to provide a fuel cell that solves electrical insulation problems of fuel cells for aeronautical use in and allows the connection of a floating bonding network in an aircraft.

The fuel cell of the invention solves the above-mentioned disadvantages and has other advantages which will be described below.

The fuel cell for aircrafts according to the present invention is described in claim 1, and the dependent claims include additional features that are optional.

In particular, the fuel cell for aircrafts comprises:
- a cell stack, comprising an anode, a cathode and a proton exchange membrane;
- a frontal end plate placed at one end of the cell stack;
- a rear end plate placed at the other end of the cell stack; and
   an insulating panel made from a polymer material placed between the cell stack and one or both of the frontal end plate and the rear end plate.

Preferably, the insulating panel comprises:
- a first insulation sheet;
- a second insulation sheet; and
- an insulation layer placed between the first and second insulation sheets.

The insulating panel can also comprise an additional insulation sheet placed in contact with the first insulation sheet between said first insulation sheet and the frontal end plate.

Furthermore, the insulating panel can also comprise seals placed in contact with the first insultation sheet.

According to a preferred embodiment, the first and second insulation sheets are made for 4,4'-oxydiphenylene-pyromellitimide.

Furthermore, the first and second insulation sheets can be attached to the insulation layer.

According to a preferred embodiment, the insulation layer can be made of polyether ether ether ketone or polyphenylene sulphide.

The frontal end plate comprises preferably interfaces for the entry and exit of a fluid, and an insulating reinforcement can be placed between end interface and the frontal end plate.

Furthermore, each insulating reinforcement can comprise a groove in which an O-ring is housed.

The frontal end plate can also comprise an insulating liner in correspondence with the interfaces.

According to a preferred embodiment, the first and second insulation sheets have a thickness of less than 0.5 mm, preferably 20-80 µm.

Furthermore, the proton exchange membrane preferably comprises a catalyst, and a seal is placed at both sides of the proton exchange membrane.

According to the present invention, the insulation is obtained by several electrical insulating parts forming the insulation panel made of polymer, preferably 4,4'-oxydiphenylene-pyromellitimide.

These parts can be adhered internally by an external physical joint or mixed with adhesive, e.g. silicone or acrylic adhesive, if it is a layer, being glued on the inside of the interfaces and the inside face of the current collectors.

This nominal current leakage through the end plates and interfaces also depends on the quality of the coolant in terms of electrical conductivity due to the amount of ions dissolved in the coolant. A coolant with a high conductivity allows current to flow to the end plates and interfaces of the stack or even generating a short circuit between the anode and the cathode.

Thus, a proper insulation is crucial to minimize current leakage to the interfaces or stack fixtures where the stack is supported in the aircraft structure, located at the end plates and avoid safety issues.

On the other hand, the insulation quality can be monitored in real time, by an insulation meter located in the aircraft's own system, which can be used to disconnect or shut down the fuel cell system if the insulation of the system drops. Additionally, to check the insulation loss due to the coolant, a conductivity sensor can be added to the cooling circuit itself.

On the other hand, another of the aeronautical requirements is maintainability, as it is important to service the different elements that comprise the aircraft. Fuel cells are essential elements in having a maintenance registry, and although they tend to have a shorter life than other fuel cells for other applications, such as stationary fuel cells and cells dedicated to heavy duty applications, they require special attention.

The maintenance that is usually applied to a fuel cell system is normally the change of filters, deionisation filters and coolant in order to improve its insulation and the advantage of polymer material, e.g., Kapton, is to have the possibility of being able to reuse its components such as end plates, interfaces or part of its internal structural components that being clean, can be intercalated and a new sheet of this material can be glued, maintaining the original insulation requirement.

This allows a minimum thickness of the layer to have the same electrical insulating effect as other existing insulating materials also used in fuel cells, such as PPS and PEEK, saving cost and weight.

### Brief description of the drawings

For a better understanding of what has been explained above, some drawings are included in which, schematically and only by way of a non-limiting example, a practical case of embodiment is represented.
Figure 1 is a frontal diagrammatic view of the fuel cell according to the present invention;
Figure 2 is a section view of a cell stack of the fuel cell according to the present invention; and
Figure 3 is a section view of the frontal end plate of the fuel cell according to the present invention.

### Description of a preferred embodiment

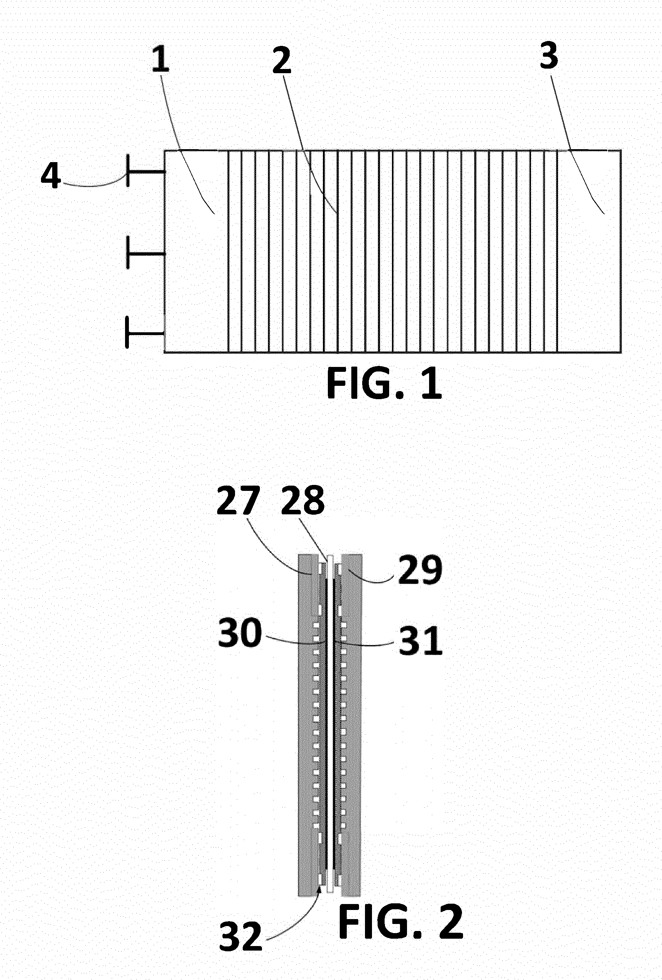

Figure 1 shows a fuel cell according to the present invention, comprising a frontal end plate 1, a plurality of cells forming a stack cell 2 and a rear end plate 3.

Furthermore, the frontal end plate 1 comprises interfaces 4 to feed the cell stack 2 with oxygen or air, hydrogen or fuel and coolant, if required.

One of the requirements for an aeronautical fuel cell system is that it must be electrically floating, i.e. that there is no current leakage to the outside, being completely isolated from electrical terminals, positive and negative ground.

The stack is formed by one or several repetitive cells 2 consisting of a polymeric proton exchange membrane 28 if it is of the PEM type, as shown in figure 2, which is a sectional side view of a fuel cell stack.

In figure 2, an anode 27 is shown, through which hydrogen or fuel passes, comprising one or several channels that distribute and evacuate the fuel and the water that may have been produced in that area homogeneously throughout the membrane.

A cathode 29 also comprises one or several channels where the air that is fed from outside through a compressor, blower or fan or the oxygen coming from an external system such as a bottle or a tank, reacts with the fuel, such as hydrogen, to give water vapor and electricity.

At the cathode 29, almost all the water produced during the reaction is evacuated. The anode 27 and the cathode 29 are monopolar plates if it is a single cell or bipolar if the fuel cell comprises more cells, the terminals being monopolar.

These plates can be made of different materials depending on the technology, the most common being graphite, graphite compounded with titanium, or steel if it is stamped with a titanium or chromium based coating to improve its electrical conductivity.

In order for the reaction to take place, the catalyst, which is usually platinum for PEMFC cells, is placed on the membrane 28 by catalytic deposition such as spray, stamping, inkjet etc. The air and fuel must diffuse well to the catalyst. Therefore, on both sides 30, 31 of the membrane, a diffusive layer made of mesh or carbon cloth is used so that the species can diffuse freely throughout the membrane 28, facilitating their reaction with the catalyst.

The assembly is called the "MEA", Membrane Electrode Assembly, which includes the gas diffusion layer or GDL for the cathode 29 and anode 27 and the membrane 28 with the catalyst. Everything has to be sealed by seals 32 to prevent air or fuel from escaping out the cell to outside or mixing. These seals 32 can be made of various polymers depending on the fuel cell technology. They are typically made of nitrile butadiene rubber (NBR), ethylene propylene diene rubber (EPDM) or a fluoroelastomer such as Viton (trade name) or FKM for higher temperature and chemical resistance.

The cells form the complete cell stack 2, which must be electrically isolated, both on the refrigerant side which flows between the bipolar plates and on the cathode 27 or anode 29 side from the outside for the system to be buoyant.

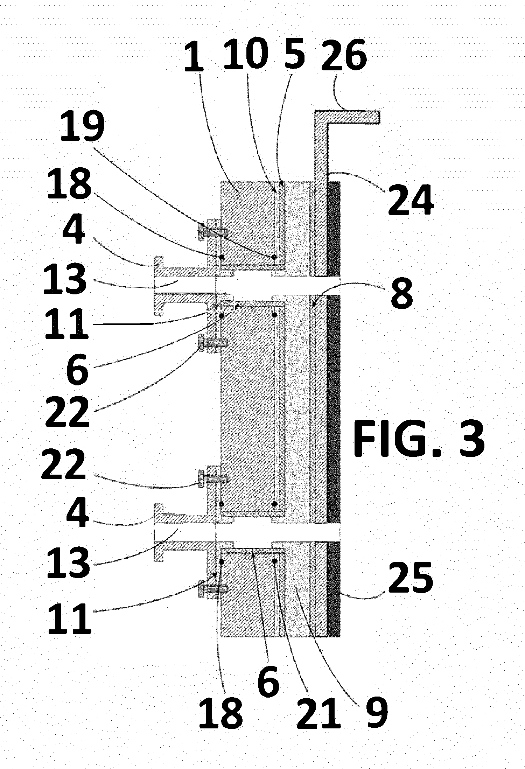

Figure 3 is a section of the frontal end plate 1, where the interfaces 4 of the stack 2 are located, through which the coolant enters and exits, this being the main cause of the loss of insulation of the fuel cell.

For the rear end plate 3 the interfaces would be removed and it would be completely blind with a different machining and morphology in order to reduce the weight of the stack.

It must be pointed out that the insulation that is disclosed hereinafter with reference to the frontal end plate 1 is also applicable to the rear end plate 3.

For providing insulation, the frontal end plate 1 comprises an insulating panel which is made from a polymer material.

This insulation panel comprises a first and second insulation sheets 5, 8 that are placed one on each side of an insulation layer 9, as shown in figure 3. Preferably the first and second insulation sheets 5, 8 are attached to the insulation layer 9.

Preferably, the first and second insulation sheets 5, 8 are made for 4,4'-oxydiphenylene-pyromellitimide, also known as Kapton^{®}, and have a thickness of less than 0.5 mm, preferably 20-80 µm, and the insulation layer 9 is preferably made of polyether ether ether ketone (PEEK), polyphenylene sulphide (PPS) or other electrically insulating polymer.

To prevent the first insulation sheet 5 from peeling off due to the degradation of an adhesive, which in this case can be of the acrylic or silicon type resistant to coolant, an additional insulation sheet 10 can be used optionally, which also forms part of the insulation panel, that can be manufactured for example in PEEK or PPS. Furthermore, the insultation panel can also comprise seals 19, 21 in contact with the first insultation sheet 5. Depending on the application and operating temperature of the fuel cell, different elastomers, such as NBR, Viton, FKM, etc., can be used.

The insulation panel prevents coolant leakage to the outside through the frontal end plate 1, which can be made of stainless steel, aluminum or even plastic, preferably made of aluminum in compliance to meet aviation fire requirements, reducing the use of flammable materials.

On the frontal end plate 1 the interfaces 4 can be housed, through which fluid 13, e.g., coolant, or the different reagents enter and exit through their segregated and dedicated interfaces 4. These interfaces 4 can be flanged, threaded or provided with a pin connector. The material of these interfaces 4 can be a polymer such as PPS or metal as a requirement for non-flammable material and higher mechanical robustness, preferably the same metal selected in the end plate to avoid the formation of galvanic couples that can give corrosion problems over time.

The flanged interfaces can be connected to the frontal end plate 1 through bolts 22. These bolts 22 should be insulated or passivated to minimize any current leakage. Additionally, if the interfaces 4 are metallic, an electrical insulating reinforcement 11 with a groove machined to accommodate an O-ring 18 can be fitted to the interfaces 4 to seal them and prevent coolant from leaking to the outside.

These interfaces 4 can include internally an insulating liner 6, e.g., made of 4,4'-oxydiphenylene-pyromellitimide or Kaptun, with the same morphology as the orifice through which the coolant or fluid to be electrically insulated passes.

This interface liners 6 can be fixed by the insulating reinforcements 11, whose termination may be lip-shaped and the insulating layer 9 can also comprise a lip termination, so that it can be fitted inside the orifices through which the fluid 13 flows. Taking advantage of the orifice, another additional reinforcement piece, not shown in the drawings, can be fitted, also made of PPS, PEEK, etc., to allow the coolant to pass through.

In this way, a current collector 24, a fuel cell terminal 26, the cell stack 2, a monopolar plate 25 and the plates 1, 3 are protected, remaining floating from the structure of the aircraft, where the fuel cell catches are located.

This solution is designed to allow the fuel cell to operate optimally with deionised water or glycol-based coolant, preferably Ethylene Glycol (EGW) 60/40 (60% glycol and 40% deionised water) or Ethylene Glycol 50/50 (50% glycol and 50% deionised water) with a low conductivity to minimize its electrical resistance across interfaces and hinder its electrical conduction to the cooling system.

During the life of the cell stack 2, several checks have to be scheduled to coincide with those of the aircraft to examine and change the coolant, particulate filters, if required, and measure the electrical insulation both dry, with the fuel cell completely shut down and disconnected, and wet, where it involves continuously measuring the electrical insulation of the stack in operation, with the coolant circulating through the interfaces so that the electrical conductivity so that the impact of the coolant and moisture on the electrical insulation itself can be studied.

## Claims

1. Fuel cell for aircrafts, comprising:
- a cell stack (2), comprising an anode (27), a cathode (29) and a proton exchange membrane (28);
- a frontal end plate (1) placed at one end of the cell stack (2); and
- a rear end plate (3) placed at the other end of the cell stack (2),
**characterized in that** the fuel cell also comprises an insulating panel (5, 8, 9) made from a polymer material placed between the cell stack (2) and one or both of the frontal end plate (1) and the rear end plate (3).

2. Fuel cell for aircrafts according to claim 1, wherein the insulating panel comprises:
- a first insulation sheet (5);
- a second insulation sheet (8); and
- an insulation layer (9) placed between the first and second insulation sheets (5, 8).

3. Fuel cell for aircrafts according to claim 1 or 2, wherein the insulating panel also comprises an additional insulation sheet (10) placed in contact with the first insulation sheet (5) between said first insulation sheet (5) and the frontal end plate (1).

4. Fuel cell for aircrafts according to anyone of the previous claims, wherein the insulating panel also comprises seals (19, 21) placed in contact with the first insultation sheet (5).

5. Fuel cell for aircrafts according to claim 2, wherein the first and second insulation sheets (5, 8) are made for 4,4'-oxydiphenylene-pyromellitimide.

6. Fuel cell for aircrafts according to claim 2, wherein the first and second insulation sheets (5, 8) are attached to the insulation layer (9).

7. Fuel cell for aircrafts according to claim 2, wherein the insulation layer (9) is made of polyether ether ether ketone or polyphenylene sulphide.

8. Fuel cell for aircrafts according to anyone of the previous claims, wherein the frontal end plate (1) comprises interfaces (4) for the entry and exit of a fluid, and an insulating reinforcement (11) placed between end interface (4) and the frontal end plate (1).

9. Fuel cell for aircrafts according to claim 8, wherein each insulating reinforcement (11) comprises a groove in which an O-ring (18) is housed.

10. Fuel cell for aircrafts according to claim 8, wherein the frontal end plate (1) comprises an insulating liner (6) in correspondence with the interfaces (4).

11. Fuel cell for aircrafts according to claim 2 or 5, wherein the first and second insulation sheets (5, 8) have a thickness of less than 0.5 mm, preferably 20-80 µm.

12. Fuel cell for aircrafts according to claim 1, wherein the proton exchange membrane (28) comprises a catalyst.

13. Fuel cell for aircrafts according to claim 1, wherein a seal (32) is placed at both sides of the proton exchange membrane (28).
